Europäisches Patentamt

European Patent Office

Office européen des brevets

Veröffentlichungsnummer: **0 285 903**

**A1**

# EUROPÄISCHE PATENTANMELDUNG

Anmeldenummer: 88104577.7

Anmeldetag: 22.03.88

Int. Cl.⁴ **B60C 27/16 , B60C 27/04 , B60B 15/26**

Priorität: 01.04.87 DE 3710900
23.06.87 DE 3720721

Veröffentlichungstag der Anmeldung:
12.10.88 Patentblatt 88/41

Benannte Vertragsstaaten:
AT BE CH DE ES FR GB GR IT LI LU NL SE

Anmelder: **Rastorfer, Hermann**
**Gleiselgasteigstrasse 34**
**D-8000 München 90(DE)**

Erfinder: **Rastorfer, Hermann**
**Gleiselgasteigstrasse 34**
**D-8000 München 90(DE)**

Vertreter: **Marx, Lothar, Dr. et al**
**Patentanwälte Schwabe, Sandmair, Marx**
**Stuntzstrasse 16 Postfach 86 02 45**
**D-8000 München 80(DE)**

Gleitschutzvorrichtung für ein Rad eines Fahrzeugs.

Eine Gleitschutzvorrichtung für ein Rad eines Fahrzeuges weist eine auf der Felge des Rades befestigbare Montageplatte (2), an der Montageplatte (2) anbringbare, radial abstehende, parallel zur Außenfläche des Rades verlaufende Greiferarme (7) und an den Enden der Greiferarme (7) vorgesehene, sich über die Lauffläche des Reifens erstreckende Greiferprofile (10) auf; die Greiferarme (7) sind in radialer Richtung beweglich, jedoch gegen radiales Ausbrechen nach außen in der Montageplatte (2) gesichert gelagert.

Fig. 3

## Gleitschutzvorrichtung für ein Rad eines Fahrzeuges

Die Erfindung betrifft eine Gleitschutzvorrichtung für ein Rad eines Fahrzeuges.

Gleitschutzvorrichtungen sind in vielen verschiedenen Ausführungsformen als Anfahrhilfen, aber auch als Fahrhilfen für Kraftfahrzeuge entwickelt worden. Insbesondere Schneeketten haben sich in weitem Umfang durchgesetzt, wobei jedoch das Aufziehen einer solchen Schneekette auf einen Reifen mühsam und das Fahrverhalten bei Benutzung einer solchen Schneekette unbefriedigend sind.

Aus diesem Grunde sind deshalb Gleitschutzvorrichtungen entwickelt worden, bei denen entweder die Kette durch andere Materialien ersetzt oder der Montagevorgang vereinfacht worden sind. Probleme bestehen jedoch in allen Fällen bei der Befestigung einer solchen Gleitschutzvorrichtung am Reifen oder, wie es in einigen Fällen bereits vorgeschlagen wurde, an der Felge selbst.

Eine Gleitschutzvorrichtung mit Felgenbefestigung für das Rad eines Fahrzeuges der angegebenen Gattung geht aus dem DE-GM 85 30 606 bzw. der EU-OS 134 309 hervor und weist einen Befestigungsnabe auf, die während des Winter-Fahrbetriebes fest auf der Felge montiert bleibt; auf diese Befestigungsnabe oder Montageplatte wird im Bedarfsfall ein über einen Teil der Lauffläche des Reifens greifendes Kunststoff-Rad montiert. Die bspw. acht flexiblen Krallen dieses Kunststoff-Rades sind bei einer realisierten und auf den Markt gebrachten Ausführungsformen mit je vier Stahl-Spikes bestückt. Der dadurch erzielbare Effekt stellt ein Mittelding zwischen einer Anfahrhilfe (durch die acht flachen Reifenauflagen) und einem schwach bestückten Spike-Reifen dar.

Die EU-OS 134 309 befaßt sich mit dem Grundaufbau einer solchen Gleitschutzvorrichtung, während das DE-GM 85 30 606 auf eine spezielle Adapterscheibe gerichtet ist, so daß die wesentlichen Grundelemente bei verschiedenen Fahrzeugen eingesetzt werden können.

Mit einer solchen Gleitschutzvorrichtung läßt sich jedoch keine mit einer Schneekette vergleichbare Traktion auf der Straße erzielen. Außerdem ist die Montage nach wie vor mühsam und umständlich.

Der Erfindung liegt deshalb die Aufgabe zugrunde, eine Gleitschutzvorrichtung für ein Rad eines Fahrzeuges der angegebenen Gattung zu - schaffen, bei der die oben erwähnten Nachteile nicht auftreten.

Insbesondere soll eine Gleitschutzvorrichtung vorgeschlagen werden, die bei einfacher Montage ohne Aufbocken des Fahrzeuges den ausreichenden, die Traktion bewirkenden Kontakt zwischen der Gleitschutzvorrichtung und dem Boden gewährleistet.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen darauf, daß die radial nach außen verlaufenden Greiferarme auf ihrer ganzen Länge parallel zur Außenfläche des Rades verlaufen und sich in ihrer unteren Lage senkrecht von oben zwischen dem Reifen und dem Boden abstützen; da die Greiferarme starr mit den die Lauffläche des Reifens übergreifenden Greiferprofilen verbunden sind, ergibt sich ein optimaler Wirkungsgrad für die Traktion, verbunden mit einem zusätzlichen Schaufelrad-Effekt durch die starren, neben dem Reifen in den Schnee eingreifenden Greiferarme und damit eine insgesamt vergrößerte Traktionsfläche.

Diese Gleitschutzvorrichtung gewährleistet einen präzisen Radlauf sowohl bei Hinterachs-als auch bei gelenkten Vorderachs-Rädern, da keine unkontrollierten Versetzungen aus der Fahrtrichtung möglich sind; dies ist darauf zurückzuführen, daß alle beweglichen Teile der Gleitschutzvorrichtung exakt und den Bewegungen des Reifens konform geführt sind.

Die Grundmontage, d.h. die Befestigung der Montageplatte, erfolgt vor Beginn der Winterphase, während die eigentlichen Gleitschutzelemente nur bei Bedarf, also bspw. bei Schneefall, ohne weitere Hilfsmittel und Werkzeuge schnell und sauber von der Außenseite des Rades her montiert werden können.

Aufbocken des Rades ist also nicht mehr erforderlich, da es in aller Regel ausreicht, wenn das Fahrzeug etwas nach vorne bzw. nach hinten bewegt wird, um die Greiferprofile zu positionieren.

Wie Versuche gezeigt haben, sind mindestens sechs Greiferprofile erforderlich, die in radialer Richtung geführt und von der Montageplatte gehalten werden und sich ohne Probleme auch auf Reifen mit kleinem Durchmesser montieren lassen.

Durch die damit erzielte Aufteilung des Radumfangs in bspw. sechs Segmente ist eine problem- und kraftfreie Montage und Demontage in allen denkbaren Verkehrs-Situationen möglich. Außerdem ergibt sich dadurch ein günstiges Stauvolumen der beliebig aneinander zu reihenden Einzelteile.

Die Montageplatte ist als "Sandwich" konstruiert, d.h. die Gleitsegmente werden in jeweils einem Gleitkanal zwischen den beiden Deckplatten der Montageplatte gelagert. Die radial nach außen aus der Montageplatte herausragenden Gleitsegmente tragen die Greiferarme mit den eigentlichen Greiferprofilen. Die Verbindung zwischen den Greiferarmen und den Greiferprofilen erfolgt entweder über ein Langloch oder über eine Loch-Gruppe, so daß die relative Lage von Greiferarm und Greiferprofil zueinander geändert und damit der Abstand zwischen Radmitte und Greiferprofil an den jeweiligen Reifen angepaßt werden kann.

Mit drei Ausführungsformen der Greiferarme, die jeweils unterschiedliche Länge haben, lassen sich so alle gängigen Reifen-und Felgen-Größen bestücken. Alle übrigen Teile bleiben bei allen im Handel erhältlichen Reifen-bzw. Felgengrößen unverändert.

Bei Abrollen des Rades weichen unter der Pressung des Reifens die Gleitsegmente radial zur Radmitte hin zurück und gehen in der Entlastungsphase wieder in ihre Arbeitslage.

Gegen ein radiales Ausbrechen aus der Montageplatte sind die Gleitsegmente durch elastische Arretierungs-Zungen gesichert, die am radial äußeren Ende der Gleitsegmente angebracht sind.

Es ist zwar aus der AU-PS 24 02 02 bereits bekannt, neben der Außenseite des Reifens Stollen anzuordnen, die gemeinsam mechanisch aus einer versenkten Ruhestellung in eine Arbeitsstellung verstellbar sind, in der sie über das Reifenprofil vorstehend mit der Fahrbahn in Eingriff kommen. Diese Stollen sind in als Gleitbüchsen ausgebildeten Führungen in Längsrichtung verstellbar gelagert. Die Führungsbüchsen sind mit Hilfe von Spannseilen oder dgl. beidseits am Rad befestigt, wobei vorzugsweise ein Spannseil zick-zack-förmig die radial außenliegenden Enden der beidseits des Radreifens angeordneten Büchsen verbindet, wogegen an jeder Radseite ein weiteres, über Spannschlösser verkürzbares und die Innenenden der an dieser Radseite angeordneten Büchsen ringförmig verbindendes Seil vorgesehen ist. Auch hier ist jedoch die Montage mühsam und umständlich und erfordert wohl im allgemeinen das Aufbocken des Rades, da die Seile kontinuierlich über die gesamte Lauffläche des Reifens geführt werden müssen. Außerdem ergibt sich nur eine vergleichsweise geringe, von den einzelnen Stollen gelieferte Traktion.

Als Alternative zu den beschriebenen Ausführungsformen ist es auch möglich, die Montageplatte einstückig mit der Felge auszubilden, so daß die Montageplatte nicht abgenommen werden kann und fest mit der Felge verbunden bleibt. Dies könnte angesichts der Vielzahl der Felgen-Typen problematisch werden, so daß gemäß einer weiteren Alternative die scheibenförmige Montageplatte fest mit der Felge verschraubt wird, also etwa auch die Funktion einer Radkappe erfüllt und deshalb nicht im Sommer abgenommen werden muß. Die Demontage der Montageplatte ist in aller Regel nur bei einem Radwechsel erforderlich.

Schließlich können auch noch Gleitsegmente mit stiftförmigen, also zylindrischen, in der Montageplatte gelagerten Befestigungselementen verwendet werden, wobei ein um die Gleitsegmente gelegter Spannring sie radial nach innen drückt und dadurch verhindert, daß die Gleitsegmente aufgrund der Fliehkraft nach außen geschleudert werden.

Die Erfindung wird im folgenden anhand von Ausführungsbeispielen unter Bezugnahme auf die beiliegenden, schematischen Zeichnungen näher erläutert. Es zeigen:

Fig. 1 eine Ansicht eines Rades mit der vormontierten Montageplatte, die über Gewindespindeln und Spannhaken am Felgenrand befestigt ist,

Fig. 2a einen seitlichen Schnitt durch den Felgenrand mit dem Spannhaken und der in der Montageplatte gelagerten Gewindespindel,

Fig. 2b eine perspektivische Ansicht des Felgenrandes, der Gewindespindel und des Spannhakens,

Fig. 3 einen vertikalen Teilschnitt durch einen Reifen mit der auf dem Felgenrand montierten Gleitplatte mit den Gleitsegmenten, den Greiferarmen und den Greiferprofilen,

Fig. 4 verschiedene Darstellungen des Gleitsegmentes mit den beiden Greiferarmen und den Greiferprofilen, nämlich

Fig. 4a eine perspektivische Ansicht des Gleitsegmentes,

Fig. 4b eine Vorderansicht des Gleitsegmentes und

Fig. 4c eine Detailansicht des Reifens mit der Montageplatte und zwei in unterschiedlichen Lagen befindlichen Gleitsegmenten,

Fig. 5 eine mit Spannhaken und Gewindespindel montierte sowie komplett mit Gleitsegmenten bestückte Montageplatte mit abgenommener Abdeckung,

Fig. 6 eine Figur 5 entsprechende Ansicht eines belasteten, mit der Gleitschutzvorrichtung versehenen Rades,

Fig. 7 eine Vorderansicht auf einen Luftreifen mit einer anderen Ausführungsform der Montageplatte,

Fig. 8 eine Detailansicht der in den Gleitkanälen der Montageplatte nach Figur 7 einrastenden Radial-Schlitz-Platte,

Fig. 9 verschiedene Darstellungen der Radial-Schlitz-Platte und ihrer Befestigungsschraube, nämlich

Fig. 9a eine perspektivische Ansicht,

Fig. 9b eine Schnittansicht und

Fig. 9c die in ihre Einzelteile zerlegte Befestigung im Schnitt bzw. in der Draufsicht,

Fig. 10 einen Teilschnitt durch einen Reifen mit der zweiten Ausführungsform der Montageplatte und den Gleitsegmenten,

Fig. 11 zwei verschiedene Ansichten der Gleitsegmente, nämlich

Fig. 11a ein Gleitsegment mit Langloch und

Fig. 11b zwei an die Montageplatte montierte Gleitsegmente in unterschiedlichen Lagen,

Fig. 12 ein unbelastetes Rad mit der zweiten Ausführungsform der Montageplatte und den Gleitsegmenten.

Fig. 13 eine Figur 12 entsprechende Ansicht eines belasteten Rades mit der zweiten Ausführungsform der Montageplatte und den Gleitsegmenten.

Fig. 14 zwei Ansichten einer weiteren Ausführungsform einer Montageplatte mit einem Gleitsegment,

Fig. 15 eine Figur 3 entsprechende Darstellung dieser auf einen Reifen montierten Ausführungsform, und

Fig. 16 eine perspektivische Ansicht des Gleitelementes der Ausführungsform nach den Figuren 14 und 15.

Die aus den Figuren ersichtliche Gleitschutzvorrichtung kann an einem Rad eines Kraftfahrzeuges angebracht werden, das aus einer Felge, deren Rand durch das Bezugszeichen 1 angedeutet ist, und einem Luftreifen 100 besteht. Dabei kann es sich sowohl um ein angetriebenes, gelenktes oder ungelenktes Rad als auch um ein nicht angetriebenes Rad handeln.

In einem ersten Schritt wird eine Montageplatte 2 an der Felge befestigt. Diese Vormontage der Montageplatte 2 erfolgt in aller Regel jeweils vor Beginn des Winters, so daß die Montageplatte 2 während des Winters fest am Rad bleibt; als Alternative hierzu ist es auch möglich, die Montageplatte 2 ständig auf Zweitfelgen montiert zu lassen, so daß diese Felgen jederzeit an das Fahrzeug montiert werden können.

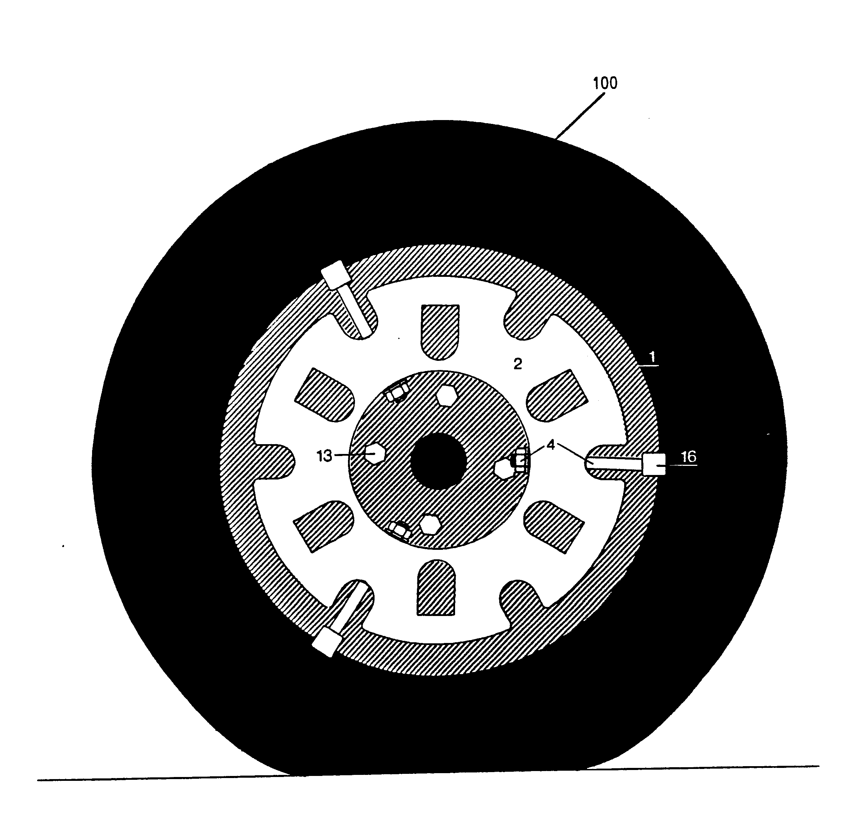

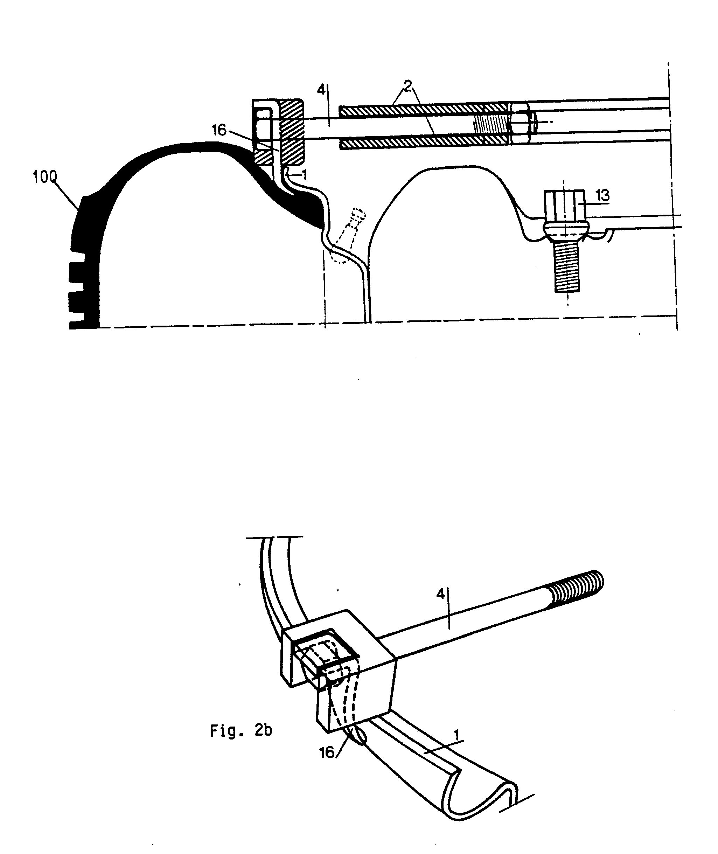

Die Figuren 1 bis 6 zeigen eine erste Ausführungsform der Befestigung der Montageplatte 2 an dem Felgenrand 1 des Rades, nämlich mit Hilfe von Gewindespindeln 4 mit hakenförmigen Enden 16 (siehe Figur 2, 2a), die zwischen Felgenrand 1 und Luftreifen angeordnet und durch Anziehen der Gewindespindeln 4 verspannt werden können.

In Figur 2a ist auch eine übliche Radmutter 13 für die Befestigung der Felge auf der Achse dargestellt.

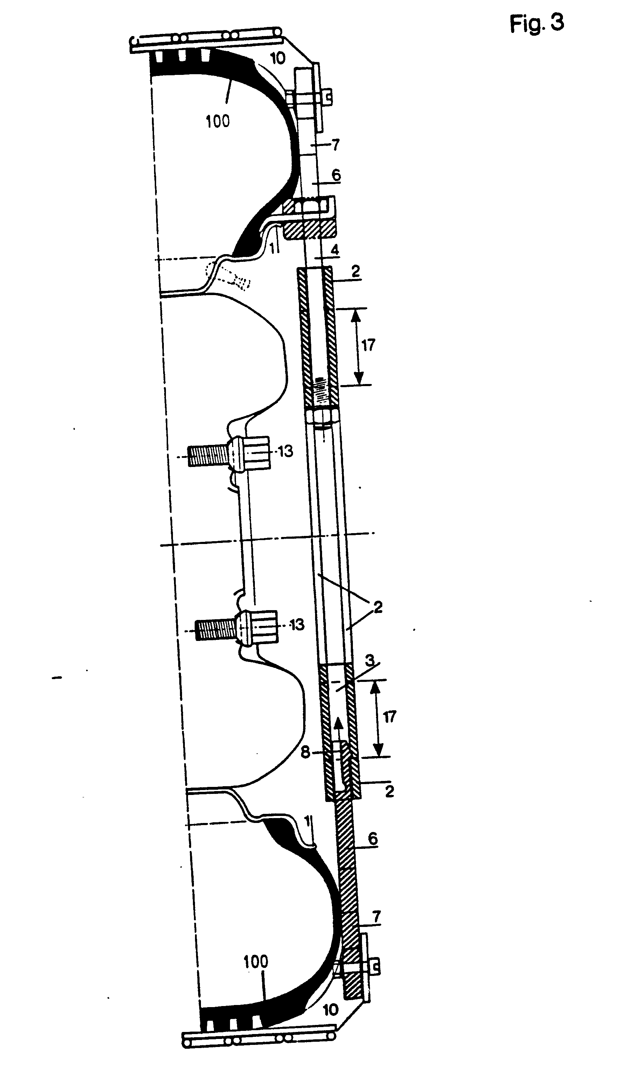

Wie man insbesondere in Figur 3 erkennt, hat die Montageplatte 2 einen "Sandwich-Aufbau", besteht also aus zwei starr miteinander verbundenen, jedoch im Abstand voneinander angeordneten Deckplatten, so daß zwischen den beiden Deckplatten der Montageplatte 2 Gleitkanäle 3 ausgebildet sind, in die bei Bedarf, also beim eigentlichen Winterbetrieb, Gleitsegmente 6 mit Greiferarmen 7 und Greiferprofilen 10 gesteckt werden können. Zwischen den Gleitkanälen können Zwischenstücke in den Spalt zwischen den beiden Deckplatten eingesetzt werden, um die Stabilität zu erhöhen.

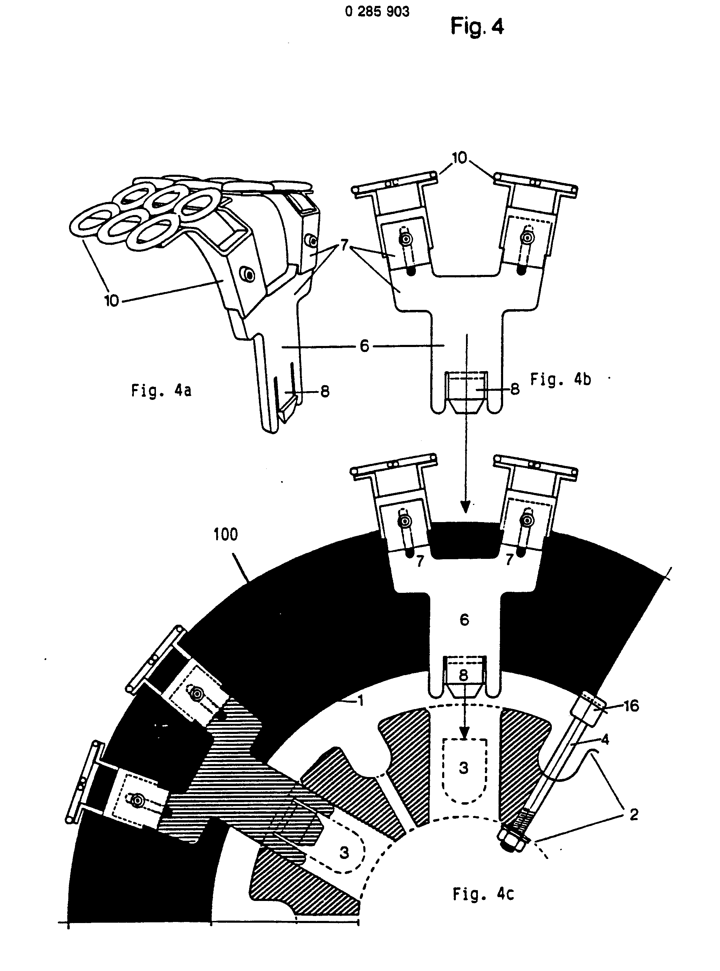

Die aus den verschiedenen Ansichten von Figur 4 ersichtlichen Gleitsegmente 6 haben etwa Gabelform, bestehen also aus einem unteren, verschiebbar in den Gleitkanälen der Montageplatte 2 geführten Basisbereich und können zwei radial nach außen vorstehende, die eigentlichen Greiferarme 7 bildende Spitzen tragen. An das radial äußere Ende der Greiferarme 7 sind mittels eines Langlochschlitzes 9 die eigentlichen Greiferprofile 10 geschraubt, die (siehe Figur 4a) eine besonderes reibungsintensive Form haben; wie aus Figur 4a ersichtlich, können bspw. auf die Greiferprofile 10 Kettenglieder geschweißt werden, um die Traktion zwischen den Greiferprofilen 10 und dem Boden zu erhöhen. Die Greiferprofile 10 haben etwa L-Form, so daß ihre Wirkfläche auf der Lauffläche aufliegt.

Als Alternative zu der aus Figur 4 ersichtlichen Langloch-Verschraubung zwischen Greiferarmen 7 und Greiferprofilen 10 kann auch eine Lochgruppe vorgesehen werden, die eine radiale Einstellung der Greiferprofile 10 ermöglicht.

Am unteren Ende des Basisteils der Gleitsegmente 6 sind zwei in radialer Richtung verlaufende Schlitze vorgesehen, so daß sich dort ein dreiteiliger Aufbau mit einer zentralen, elastisch verformbaren Arretierungszunge 8 ergibt, die (siehe Figur 4a) mit einer Anschlagkante versehen ist.

Wie man aus Figur 4c erkennt, werden die Gleitsegmente 6 radial von außen nach innen in die Gleitkanäle 3 der Montageplatte 2 eingeschoben, wobei die Arretierungszunge 8 wegen ihrer Verformbarkeit nur relativ geringen Widerstand leistet, also für diese Einführung keine große Kraft erforderlich ist.

Die Montageplatte 2 ist, auch aus Gewichtsgründen, mit Aussparungen versehen, so daß sich beim Erreichen einer solchen Aussparung die Arretierungszunge 8 axial nach außen verformt und dadurch ihre Anschlagkante in Anlage an den radial äußeren Rand der Aussparung kommt. Nun kann sich der Basisteil des Gleitsegmentes 6 in radialer Richtung frei nach innen bewegen, wird jedoch durch die Anlage zwischen der Anschlagkante der Arretierungszunge 8 und der Kante des Ausschnittes in der Montageplatte 2 daran gehindert, unter der Einwirkung der Fliehkraft radial nach außen auszubrechen.

Wie man aus Figur 1 erkennt, haben die Aussparungen in der Montageplatte 2 etwa die Form eines Rechteckes mit abgerundeter, radial innerer Kante. Es sind auch andere Formen möglich.

Zur Demontage der Gleitsegmente müssen die Arretierungszungen 8 nur einfach mit einem Finger etwas nach innen zur Achse des Rades hin gedrückt werden, so daß ihre Anschlagkante an der Kante der Aussparung vorbeigeschoben werden kann. Nun lassen sich die Gleitsegmente 6 radial nach außen abnehmen.

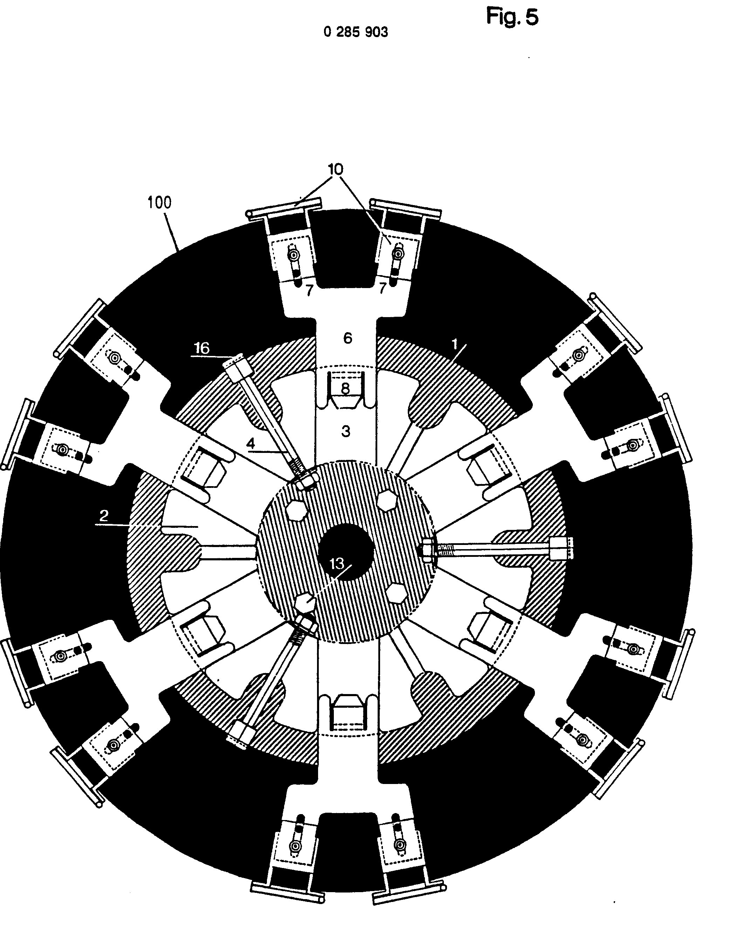

Bei unbelastetem Rad haben die Gleitsegmente 6 die aus Figur 5 ersichtliche Lage, bei der die Greiferprofile 10 auf der Lauffläche des Reifens aufliegen und die Anschlagkante der Arretierungszunge 8 an der radial äußeren Kante der Aussparungen in der Montageplatte 2 anliegt.

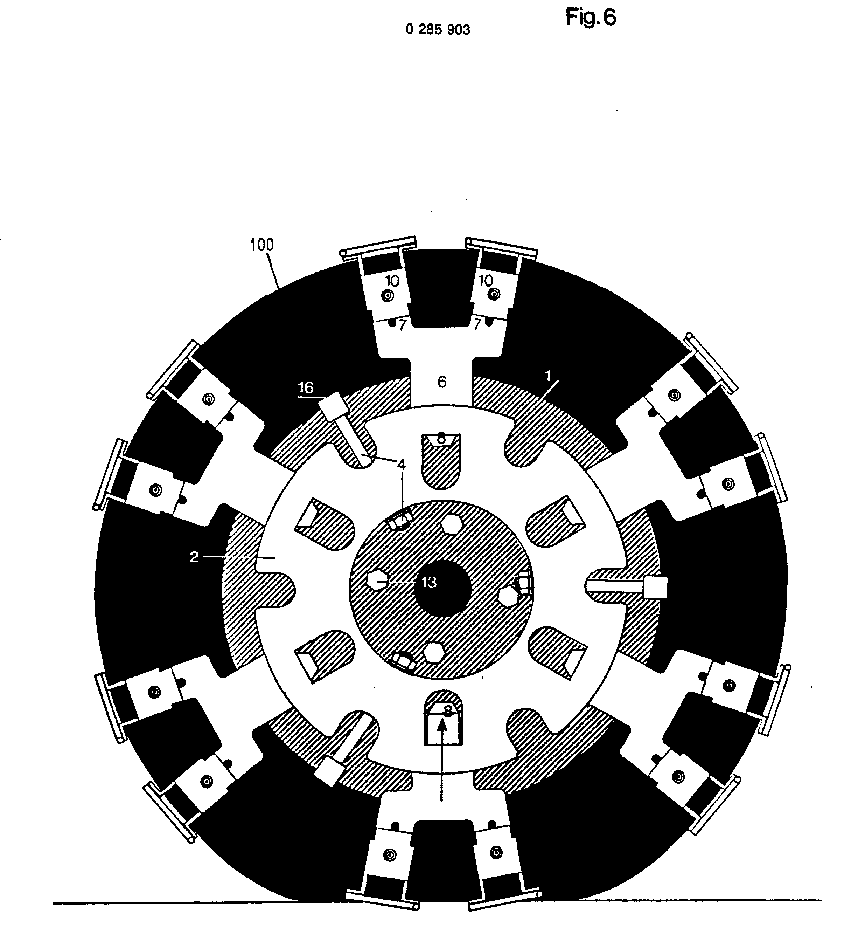

Bei belastetem Reifen können die Gleitsegmente 6, die sich im Bereich der Aufstandsfläche des Reifens befinden, radial nach innen verschoben werden, wie es aus Figur 6 ersichtlich ist. Dadurch ist jeweils die optimale Traktion gewährleistet.

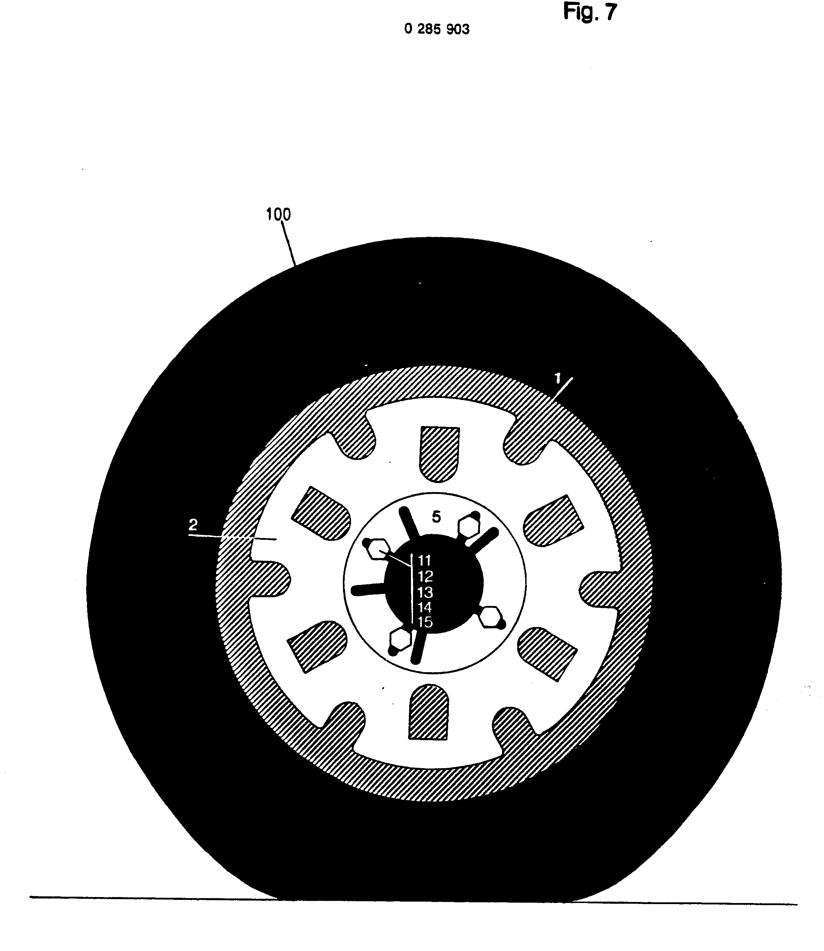

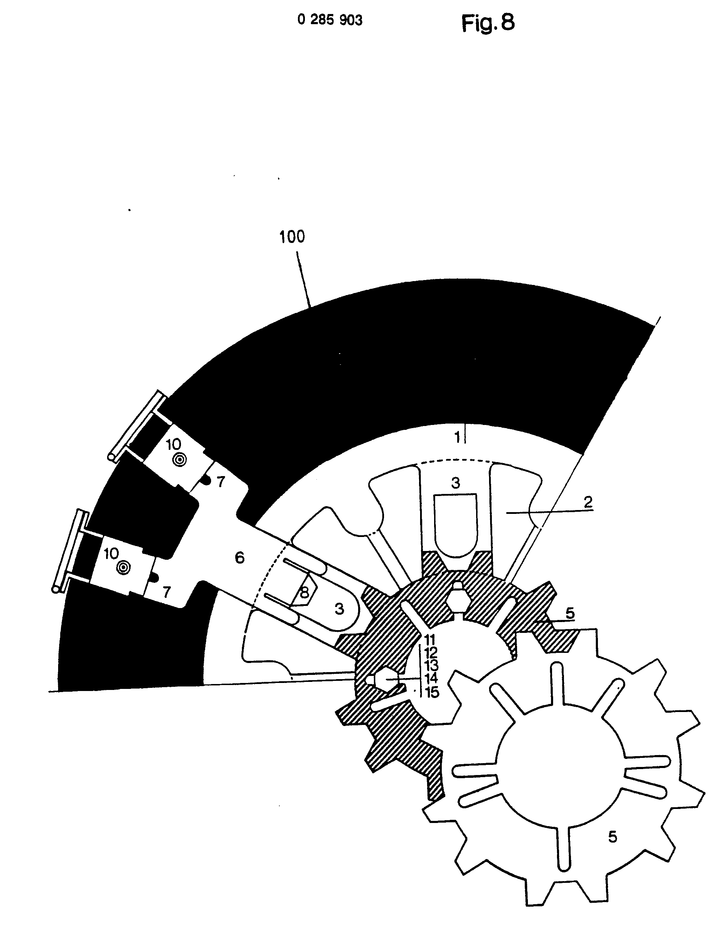

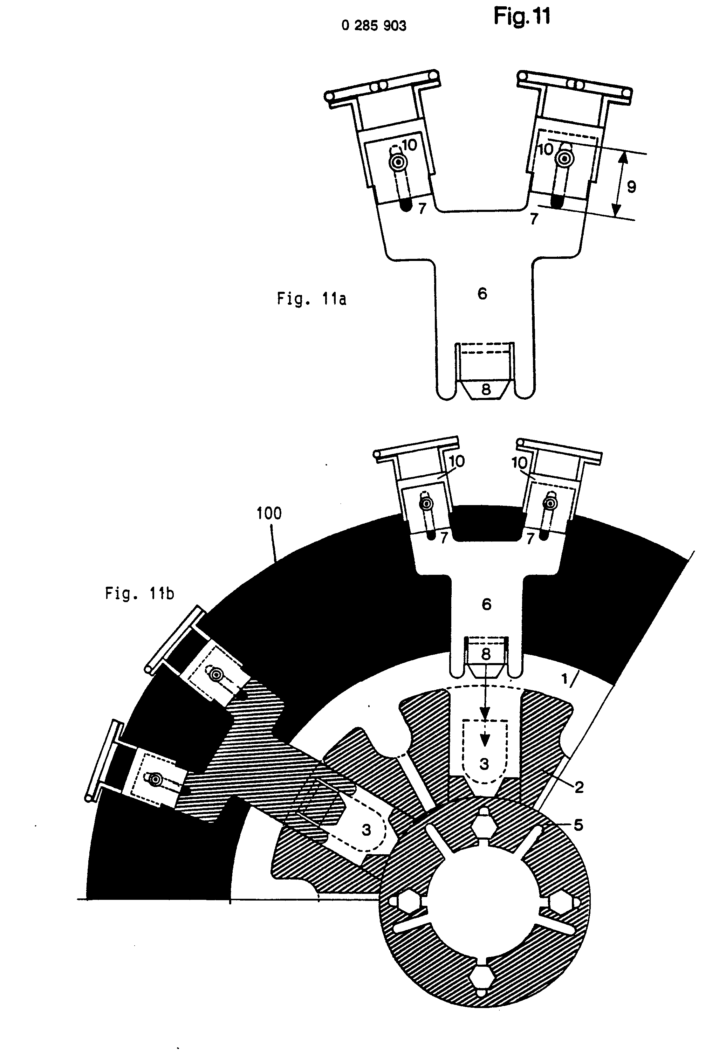

Bei der Ausführungsform nach den Figuren 7 bis 13 wird die Montageplatte 2, die den gleichen Aufbau wie bei der Ausführungsform nach den Figuren 1 bis 6 hat, nicht durch die Spannschrauben 4, sondern mittels einer Radial-Schlitz-Platte 5 an der Felge befestigt. Hierbei werden die Radmuttern 13 ausgenutzt, die in Abhängigkeit vom jeweiligen Kraftfahrzeug-Fabrikat unterschiedliche Formen haben; zur Anpassung an diese Formen werden auf die Radmuttern 13 vorgespannte Schlitz-Muffen 11 und eine Überwurfmutter 12 aufgespannt, die einen äußeren Sechskant-Kopf mit einem Innengewinde 14 hat.

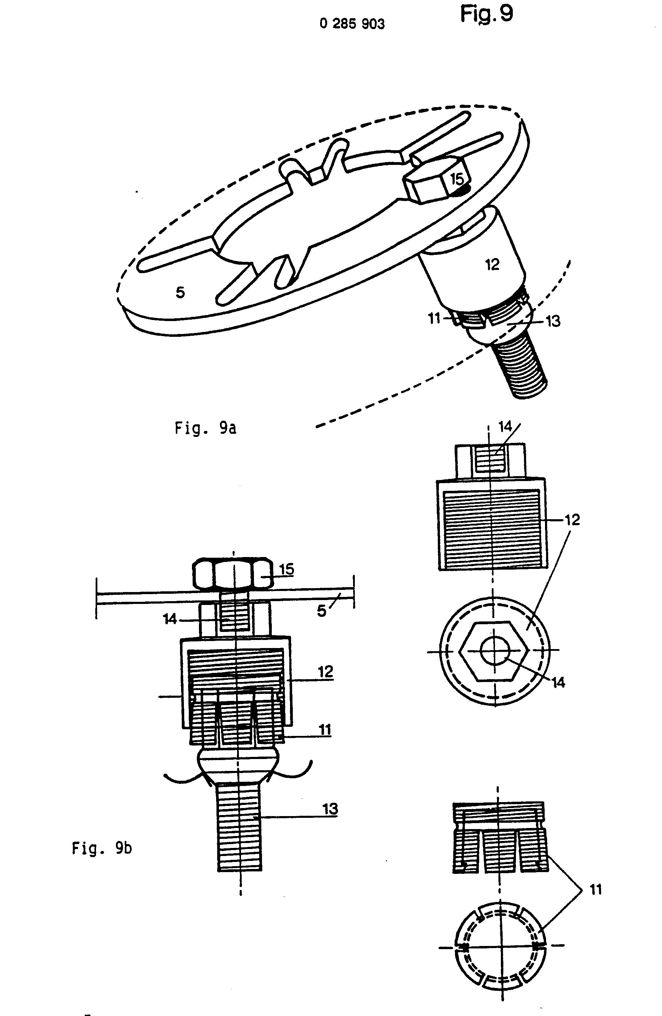

Die Radial-Schlitz-Platte 5 weist eine zentrale Aussparung auf, an die sich radial nach außen verlaufende Schlitze anschließen. Durch diese Schlitze werden Befestigungsschrauben 15 geführt, die in das Innengewinde 14 der Überwurfmutter 12 eingeschraubt werden. Sieht man, wie bei der dargestellten Ausführungsform, in Anpassung an die Zahl der Radmuttern 13 insgesamt acht Schlitze in der Platte 5 vor, so ergibt sich eine selbstzentrierende Verschraubung der Radial-Schlitzplatte 5 auf den Radmuttern 13 unter Zwischenschaltung der aus Figur 9 ersichtlichen Elemente.

Die radiale Anordnung der Schlitze in der Platte 5 im Abstand von 90° und 72°, wie es insbesondere aus Figur 9 ersichtlich ist, ermöglicht eine Befestigung der Schlitzplatte 5 auf allen gängigen PKW-Modellen.

Die Schlitzmuffe 11 besteht aus einem gehärteten Stahl, um die auftretenden Belastungen aufnehmen zu können.

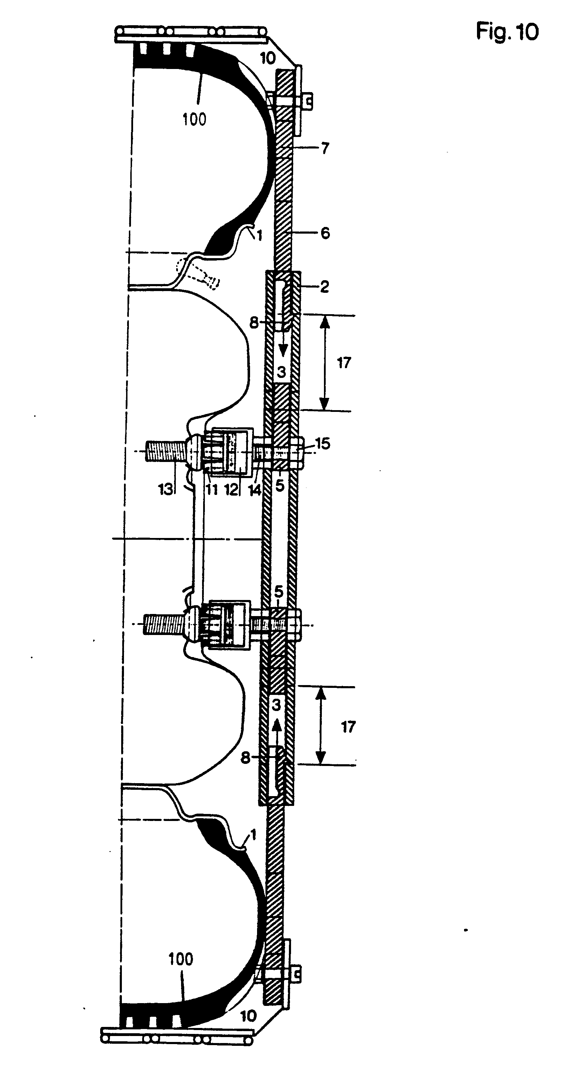

Die Radial-Schlitzplatte 5 wird in die Montageplatte 2 eingesetzt, so daß Radial-Schlitzplatte 5 und Montageplatte 2 gleichzeitig mittels der Befestigungsschraube 15 auf den Radmuttern 13 befestigt werden können, wie man aus Figur 10 erkennt.

Bei der Vormontage am Beginn des Winters werden also Radial-Schlitzplatte 5 und Montageplatte 2 gleichzeitig auf den Radmuttern 13 des Reifens befestigt und bleiben während des Winters in dieser Lage, so daß bei Bedarf, wie bereits erläutert, die Gleitsegmente und damit der eigentliche aktive Teil der Gleitschutzvorrichtung montiert werden können.

Auch bei dieser Ausführungsform erfolgt die Montage der Gleitsegmente auf die bereits erläuterte Weise, so daß eine Wiederholung nicht erforderlich sein dürfte.

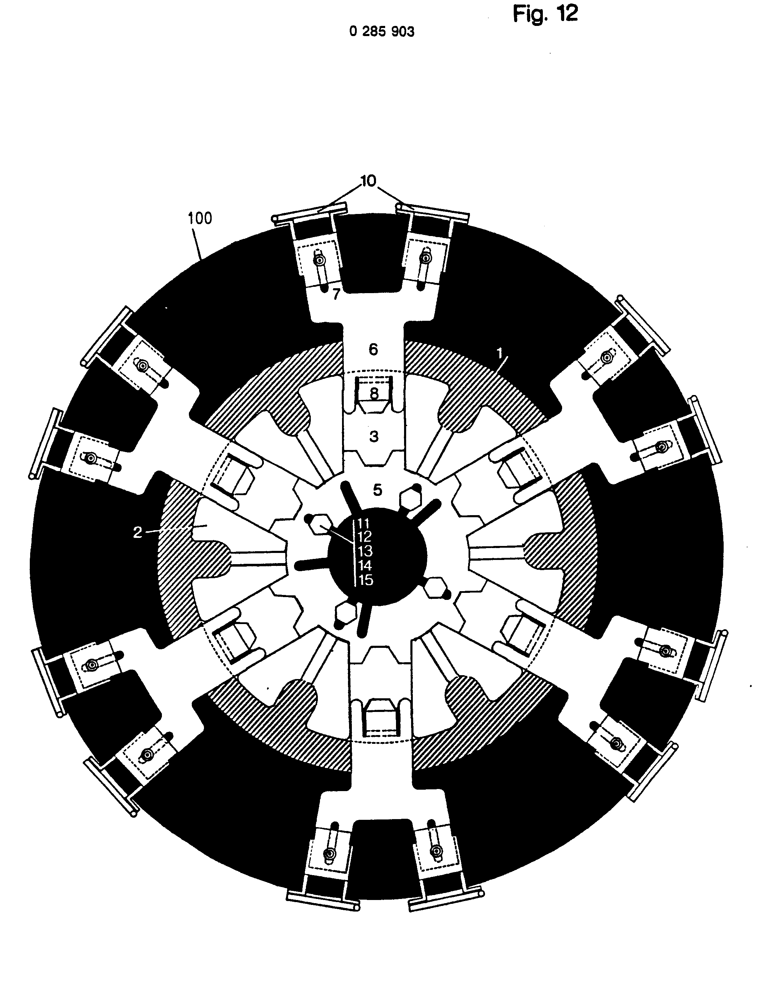

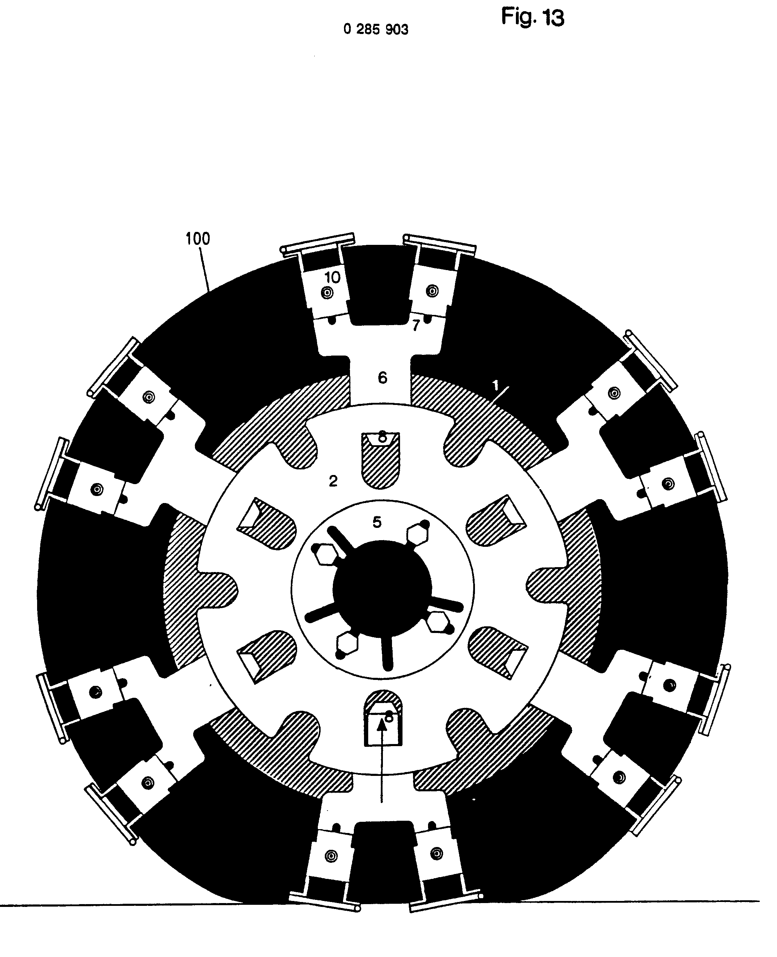

Die Gleitkanäle 3 in der Montageplatte 2 haben die Aufgabe, den durch die Pressung der Luftreifen an der Aufstandsfläche entstehenden variablen Raddurchmesser auszugleichen und den Gleitsegmenten 6 bei Pressung des Reifens Platz zu geben, wie man aus einem Vergleich zwischen den Figuren 12 und 13 erkennt. Der Vorteil liegt hierbei in der präzisen Radführung ohne eine Gefahr des Ausbrechens oder Versetzens aus der Radspur in Verbindung mit einer zusätzlichen Schaufelrad-Wirkung auf Neuschnee-Fahrbahnen durch die neben dem Reifen-Querschnitt liegenden Teile der Greiferprofile 10.

Der am radial äußeren Ende des Greiferarmes 7 vorgesehene Langloch-Schlitz 9 bzw. die alternative Ausführungsform, also eine Lochgruppe, ermöglicht stufenlos eine exakte Anpassung der Lager der Greiferprofile 10 an die variablen Reifen bzw. Raddurchmesser.

Damit wird es möglich, alle Reifen- und Felgenvarianten von 12 Zoll bis 16 Zoll mit nur drei variablen Längen der Greiferarme zu bestücken, während alle übrigen Teile unverändert zu verwenden sind.

Die Greiferarme sind mit den Greiferprofilen 10 verschraubt; diese Verbindung läßt sich problemlos lösen, so daß die wesentlichen Verschleißteile, nämlich die Greiferprofile 10, jederzeit ausgewechselt werden können.

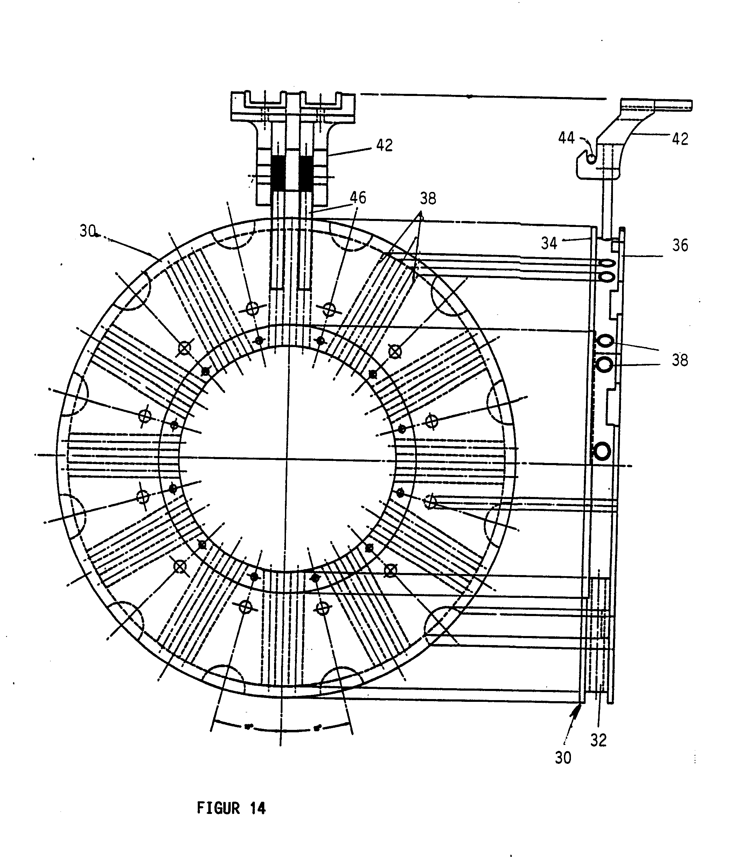

Die Figuren 14 bis 16 zeigen eine Ausführungsform einer modifizierten Gleitschutzvorrichtung mit einer scheibenförmigen Montageplatte 30, die einen ringförmigen Scheibenkern 32 und zwei parallel zueinander angeordnete, scheibenförmige Abdeckplatten 34, 36 aufweist. Die Abdeckplatten 34, 36 haben einen etwas größeren Durchmesser als der Scheibenkern 32, so daß überstehende, flanschartige Bereiche entstehen, wie man in der rechten Darstellung von Fig. 14 erkennt.

Der Scheibenkern 32 ist mit radial verlaufenden, zylindrischen Bohrungen 38 versehen, die jeweils paarweise angeordnet sind. Die dargestellte Ausführungsform weist zwölf Paare von Bohrungen 38 auf, die sich vom äußeren Rand des Scheibenkerns 32 radial nach innen erstrecken und am radial inneren Rand des ringförmigen Scheibenkerns 32 enden.

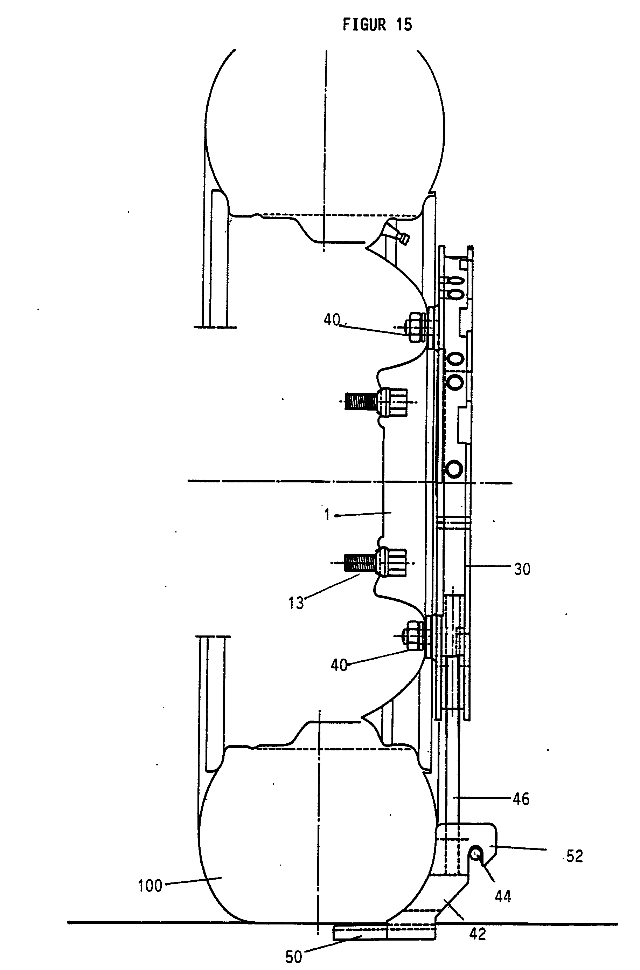

Wie man aus Fig. 15 erkennt, ist die einstückige, scheibenförmige Montageplatte 30 durch Schrauben 40 an dem Rand der Felge 1 befestigt, so daß sie den zentralen Bereich der Felge 1 und insbesondere die Radmuttern 13 bedeckt. Sie erfüllt also etwa die Funktion einer Radkappe, so daß sie ständig am Rad verbleiben kann.

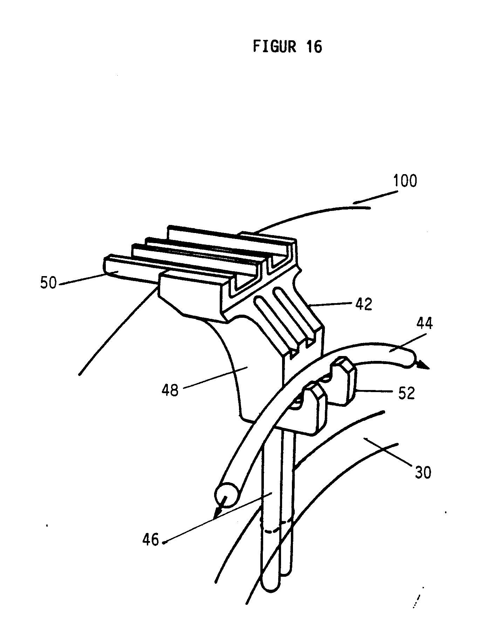

In den beiden, jeweils nebeneinander liegenden Bohrungen 38 im Scheibenkern 32 werden zwei stiftförmige Befestigungselemente 46 von Gleitsegmenten 42 aufgenommen. Bei der dargestellten Ausführungsform sind also zwölf Gleitsegmente 42 vorgesehen, deren 24 Befestigungsstifte 46 frei in den Bohrungen 38 verschiebbar sind; der Durchmesser der Bohrungen 38 ist also etwas größer als der Durchmesser der stiftförmigen Befestigungselemente 46 der Gleitsegmente 42, deren Aufbau aus Fig. 16 ersichtlich ist.

Die stiftförmigen Befestigungselemente 46 sind an einem Hauptteil 48 angebracht, der radial nach außen ragt und sich längs der Seitenwand des Luftreifens 100 nach außen erstreckt (siehe Fig. 15). In der radial äußeren Fläche des Hauptteils 48 sind Schienen 50 mit U-förmigem Querschnitt aufgenommen, die sich bis über die Lauffläche des Luftreifens 100 erstrecken (siehe Fig. 15). Die Außenränder der Schienen 50 sind in die Außenfläche des Hauptkörpers 48 eingebettet, damit die relativ großen, zwischen Boden, Schienen 50 und Hauptteil 48 wirkenden Kräfte aufgenommen werden können. Die Vertiefungen der Schienen 50 sind also radial nach außen gewandt, so daß die Schienen 50 die erforderliche Traktion liefern.

Bei großen Schneehöhen bewegt sich auch der schaufelförmig ausgebildete Hauptteil 48 des Gleitsegmentes 42 durch den Schnee seitlich neben dem Rad, so daß sich aufgrund dieser "Schaufelwirkung" eine zusätzliche Traktion ergibt.

Auf der von dem Luftreifen 100 abgewandten Seite ist das Gleitsegment 42 mit hakenartigen Vorsprüngen 52 versehen, in deren Vertiefung ein Spannring 44 (siehe auch Fig. 14 und 15) aufgenommen ist. Dieser Spannring 44 besteht aus einem elastomaren Material insbesondere Gummi, verbindet alle Gleitsegmente 42 miteinander und spannt sie zu einer Bewegung radial nach innen vor, so daß die Gleitsegmente 42 entgegen den auftretenden Zentrifugalkräften mittels der Befestigungsstifte 46 in den Bohrungen 38 der Montageplatte 30 gehalten werden:

Die Ausführung der Konstruktionsteile kann in Metall und Kunststoff oder ausschließlich aus Kunststoff erfolgen. Die eigentlichen Befestigungselemente sollten aus V2A-Stahl gefertigt sein.

Bei einem realisierten Prototyp wurden die Gleitsegmente, die Gleitarme und auch die Gleitprofile aus POM, also Polyoximethylen bzw. Polyformaldehyd hergestellt; es handelt sich um ein hartes, abriebfestes, formbeständiges Material, das gute Federungseigenschaften hat. Alle übrigen Teile, insbesondere die Befestigungs-und Greiferelemente, bestanden aus V2A-Stahl.

## Ansprüche

1. Gleitschutzvorrichtung für ein Rad eines Fahrzeuges
a) mit einer auf der Felge des Rades befestigbaren Montageplatte,
b) mit an der Montageplatte anbringbaren, radial abstehenden, parallel zur Außenfläche des Rades verlaufenden Greiferarmen, und
c) mit an den Enden der Greiferarme vorgesehenen, sich über die Lauffläche des Reifens erstreckenden Greiferprofilen,
**dadurch gekennzeichnet, daß**
d) die Greiferarme (6, 7) in radialer Richtung beweglich, jedoch gegen radiales Ausbrechen nach außen gesichert in der Montageplatte (2) gelagert sind.

2. Gleitschutzvorrichtung nach Anspruch 1, dadurch gekennzeichnet, daß die Montageplatte (2) durch mindestens drei Gewindespindeln (4) mit hakenförmigem Ende (16) mit dem Felgenrand (1) verspannt ist.

3. Gleitschutzvorrichtung nach Anspruch 1, dadurch gekennzeichnet, daß die Montageplatte (2) an ihrem radial inneren Rand in der Lage der Radbolzen (13) entsprechenden Abständen von 90° bzw. 72° radial verlaufende Schlitze (5) aufweist, durch die eine auf die vorhandenen Radbolzen (13) aufgesetzte Verschraubung (11, 12, 14, 15) geführt ist.

4. Gleitschutzvorrichtung nach Anspruch 3, dadurch gekennzeichnet, daß zur Befestigung der Montageplatte (2) auf die Radmuttern (13) eine vorgespannte, gehärtete Schlitz-Muffe (11) aufgesetzt und mit einer Überwurf-Mutter (12) mit einem Innengewinde (14) verspannt ist, und daß in das Innengewinde eine Befestigungsschraube (15) eingeschraubt ist.

5. Gleitschutzvorrichtung nach einem der Ansprüche 3 oder 4, gekennzeichnet durch eine in die Montageplatte (2) eingesetzte, mit den Radmuttern bzw. Radbolzen verschraubbare Radial-Schlitzplatte (5).

6. Gleitschutzvorrichtung nach einem der Ansprüche 1 bis 5, dadurch gekennzeichnet, daß die Montageplatte (2) als Sandwich-Konstruktion aus zwei Deckplatten gebildet ist, zwischen denen Gleitkanäle (3) für die Aufnahme der Greiferarme (7) ausgebildet sind.

7. Gleitschutzvorrichtung nach Anspruch 6, dadurch gekennzeichnet, daß in die Gleitkanäle (3) der Montageplatte (2) radial von außen her mindestens sechs Gleitsegmente (6) einführbar sind, die an ihrem radial inneren Ende jeweils eine elastisch verformbare Arretierungs-Zunge (8) mit einer Anschlagkante aufweisen.

8. Gleitschutzvorrichtung nach Anspruch 7, dadurch gekennzeichnet, daß die Montageplatte (2) mit radialen Aussparungen versehen ist, deren radial äußere Kanten als Gegenfläche für die Anschlagkante der Arretierungszungen (8) dienen.

9. Gleitschutzvorrichtung nach einem der Ansprüche 7 oder 8, dadurch gekennzeichnet, daß jedes Gleitsegment (6) Gabelform mit mindestens zwei radial nach außen vorstehenden Greiferarmen (7) hat.

10. Gleitschutzvorrichtung nach einem der Ansprüche 1 bis 9, dadurch gekennzeichnet, daß jeder Greiferarm (7) an seinem radial äußeren Ende einen Langloch-Schlitz (9) oder eine Loch-Gruppe für die verstellbare Befestigung der Greiferprofile (10) aufweist.

11. Gleitschutzvorrichtung nach einem der Ansprüche 1 bis 10, dadurch gekennzeichnet, daß die Gleitsegmente (6) mit den Greiferarmen (7) und der Montageplatte (2) aus einem harten, abriebfesten formbeständigen Kunststoff, insbesondere Polyoxymethylen, und die übrigen Elemente aus Spezial-Stählen bestehen.

12. Gleitschutzvorrichtung nach Anspruch 1, dadurch gekennzeichnet, daß die einstückige Montageplatte (30) fest mit der Felge (1) verbunden ist.

13. Gleitschutzvorrichtung nach Anspruch 12, dadurch gekennzeichnet, daß die einstückige Montageplatte (30) mit der Felge (1) verschraubt ist.

14. Gleitschutzvorrichtung nach einem der Ansprüche 12 oder 13, dadurch gekennzeichnet, daß die Gleitsegmente (42) frei verschiebbar in der Montageplatte (30) gehalten und durch einen Spannring (44) radial nach innen vorgespannt sind.

15. Gleitschutzvorrichtung nach Anspruch 14, dadurch gekennzeichnet, daß die Gleitsegmente (42) Schienen (50) mit U-Profil aufweisen.

16. Gleitschutzvorrichtung nach einem der Ansprüche 14 oder 15, dadurch gekennzeichnet, daß der Spannring (44) in hakenartigen Ausnehmungen der Gleitsegmente (42) aufgenommen ist.

17. Gleitschutzvorrichtung nach einem der Ansprüche 12 bis 16, dadurch gekennzeichnet, daß die Gleitsegmente (42) stiftförmige Befestigungselemente (46) aufweisen; die frei beweglich in Löchern (38) der Montageplatte (30) aufgenommen sind.

Fig.1

Fig. 2 a

Fig. 2b

0 285 903

Fig. 3

0 285 903

Fig. 4

Fig. 4a

Fig. 4b

Fig. 4c

Fig. 6

0 285 903

Fig. 7

# Fig. 9

Fig. 9a

Fig. 9b

0 285 903

Fig. 10

Fig. 11

Fig. 11a

Fig. 11b

Fig. 12

0 285 903

Fig. 13

FIGUR 14

# FIGUR 15

FIGUR 16

## EINSCHLÄGIGE DOKUMENTE

EP 88104577.7

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP - A2 - 0 214 623 (CONFON AG) <br> * Fig. 1,10-21 * | 1,3-5, 11-13 | B 60 C 27/16 <br> B 60 C 27/04 <br> B 60 B 15/26 |
| D | & DE-U-8 530 606 | | |
| | -- | | |
| A | EP - A2 - 0 136 862 (MURDOCH) <br> * Fig. 1-3 * | 1,6,12-16 | |
| | -- | | |
| A | US - A - 3 470 932 (MATHEWS) <br> * Fig. 1-6 * | 1,6,7, 12-14 | |
| | -- | | |
| A | US - A - 3 190 335 (ISAACMAN) <br> * Gesamt * | 1,12, 13 | |
| | -- | | |
| A | DE - A1 - 2 520 125 (MEZZACAPO) <br> * Fig. 1-4 * | 1,12-16 | RECHERCHIERTE SACHGEBIETE (Int. Cl 4) |
| | ---- | | B 60 C <br> B 60 B |

Der vorliegende Recherchenbericht wurde für alle Patentansprüche erstellt.

| Recherchenort | Abschlußdatum der Recherche | Prüfer |
|---|---|---|
| WIEN | 07-06-1988 | WIDHALM |